# EUROPÄISCHE PATENTSCHRIFT

(11) **EP 0 669 163 B1**
(45) Veröffentlichungstag und Bekanntmachung des Hinweises auf die Patenterteilung: **29.10.1997**
(21) Anmeldenummer: 95100670.9
(22) Anmeldetag: 19.01.1995
(51) Int. Cl.: B01J 23/72, B01J 21/08

(54) **Geformter Kupfer-Katalysator für die selektive Hydrierung von Furfural zu Furfurylalkohol**
Formed copper catalyst for the selective hydrogenation of furfural to furfuryl-alcohol
Catalyseur formé à base de cuivre pour l'hydrogénation sélective du furfural en furfurylalcool

(30) Priorität: 02.02.1994 DE 4403187
(43) Veröffentlichungstag der Anmeldung: 30.08.1995
(73) Patentinhaber: Degussa Aktiengesellschaft, 60311 Frankfurt (DE)
(72) Erfinder: Bankmann, Martin, Dr., D-63571 Gelnhausen (DE); Ohmer, Johannes, Dr., Ridgefield Park, N.J. 07660 (US); Tacke, Thomas, Dr., D-61381 Friedrichsdorf (DE)

(56) Entgegenhaltungen:
- EP-A- 0 020 048
- EP-A- 0 393 356
- US-A- 2 754 304
- US-A- 4 185 022
- US-A- 4 221 768
- US-A- 4 261 905

## Beschreibung

Die Erfindung betrifft einen geformten Kupfer-Katalysator für die selektive Hydrierung von Furfural zu Furfurylalkohol, ein Verfahren zu dessen Herstellung sowie dessen Verwendung. Der Katalysator enthält eine innige Mischung aus reduziertem Kupfer und einem hochoberflächigen Trägermaterial.

Furfurylalkohol ist ein wichtiges selektives Lösungsmittel und wird als Ausgangsmaterial für die Produktion von Klebern, Lacken und Beschichtungen verwendet. Er wird durch katalytische Hydrierung von Furfural gewonnen.

Die Hydrierung wird im technischen Maßstab entweder in der Gasphase oder in der Flüssigphase an einem Festbett-Reaktor durchgeführt. Umsatz, Ausbeute und Selektivität dieser Reaktion hängen stark von den gewählten Prozessbedingungen und der Reinheit des Furfurals ab. Überhöhte Reaktions-temperaturen können zu unerwünschten Nebenprodukten wie zum Beispiel 2-Methylfuran, Tetrahydrofurfurylalkohol und Ethern durch Ringspaltung führen. Furfural minderer Qualität kann höhere Anteile an Essigsäure und Schwefel enthalten, die zu einer vorzeitigen Vergiftung des Katalysators führen.

Geeignete Katalysatoren für die Hydrierung von Furfural sind Kupferchromit-Katalysatoren, Raney-Ni, Raney-Co und Raney-Cu-Katalysatoren sowie Kupferkatalysatoren, die mit Natriumsilikaten promotiert sind.

Die USP 2,754,304 beschreibt einen Katalysator für die Gasphasenhydrierung von Furfural zu Furfurylalkohol. Der Katalysator besteht im wesentlichen aus reduziertem Kupfer promotiert mit einem geringeren Anteil an Natriumsilikat. Er wird durch Vermischen von Kupfer(II)-Oxid mit 5 bis 20 Gew.-% Natriumsilikat, Verformen dieser Mischung zu Tabletten und anschließendes Reduzieren des Kupfer(II)-Oxids zu metallischem Kupfer hergestellt. Zur Reduktion wird erhitztes Wasserstoffgas über die Katalysatortabletten geleitet. Mit diesem Katalysator werden bei der Gasphasenhydrierung von Furfural Umsätze von über 99 % erhalten.

Die USP 4,185,022 beschreibt eine Weiterentwicklung dieses Katalysators. Er besteht aus einem neutralen oder alkalischen anorganischen Trägermaterial mit einer spezifischen Oberfläche von mindestens 60 m²/g vor dem Abscheiden einer Kupfer/Natriumsilikat-Komponente auf diesen Träger. Die Kupfer/Natriumsilikat-Komponente besteht zu 5 - 20 Gew.-% aus Natriumsilikat. Der fertige Katalysator enthält mindestens 8 aber nicht mehr als 25 % reduziertes Kupfer. Als geeignete Trägermaterialien werden Bimsstein, Silikagel, Quarz und neutrale Aluminiumoxide genannt. Bevorzugt wird Bimsstein eingesetzt.

Die deutsche Offenlegungsschrift DE 41 42 897 A1 beschreibt poröse Katalysator-Formkörper, die ein Metall der Eisengruppe und/oder Kupfer auf einem Träger aus Oxid oder Silicat, insbesondere aus pyrogener Kieselsäure, enthalten.

Der Metallgehalt der Formkörper beträgt 5 bis 40 Gew.-% bezogen auf ihr Gesamtgewicht. Die Metallkristallite auf dem Träger weisen eine Größe von ≤ 3 nm auf. Diese geringe Größe der Metallkristallite wird durch ein spezielles Herstellungsverfahren gewährleistet, welches darin besteht, daß Vorläuferverbindungen der Metalle mittels einer Hydrolysefällung in einer Suspension des pulverförmigen Trägermaterials auf dem Trägermaterial abgeschieden werden. Nach Verformung des pulverförmigen Trägermaterials zu Formkörpern werden diese bei Temperaturen zwischen 300 und 500°C kalziniert und bei Temperaturen zwischen 400 und 450°C im Wasserstoffstrom reduziert. Die so erhaltenen Katalysatoren sind für die Hydrierung von Kohlenwasserstoffen geeignet.

Aufgabe der vorliegenden Erfindung ist es, einen chromfreien Katalysator für die Hydrierung von organischen Verbindungen, insbesondere für die selektive Hydrierung von Furfural zu Furfurylalkohol, zur Verfügung zu stellen, der gegenüber den bekannten chromfreien Katalysatoren eine verbesserte spezifische Katalysatoraktivität aufweist und Furfural mit erhöhter Selektivität und verbesserter Ausbeute zu Furfurylalkohol hydrieren kann.

Diese Aufgabe wird gelöst durch einen geformten Kupfer-Katalysator gemäß Anspruch 1, der eine innige Mischung aus Kupfer und pyrogener Kieselsäure enthält, sowie einen Verfahren zu dessen Herstellung gemäß Anspruch 3. Der Katalysator ist dadurch gekennzeichnet, daß die durch Röntgenbeugung bestimmbare mittlere Größe der Kupferkristallite zwischen 5 und 50 nm liegt, der Gehalt an Kupfer bezogen auf das Gesamtgewicht des Katalysators zwischen 10 und 70 Gew.-% beträgt und der Katalysator gegebenenfalls noch bis zu 15 Gew.-% eines basischen Oxids enthält.

Die physikalisch-chemischen Eigenschaften pyrogener Kieselsäuren werden in der Schriftenreihe "Pigmente, Nummer 11: Grundlagen von AEROSIL" der Degussa AG eingehend beschrieben.

Pyrogene Kieselsäuren werden durch Flammenhydrolyse aus Siliziumtetrachlorid gewonnen. Sie zeichnen sich durch extreme Feinteiligkeit und entsprechend hohe spezifische Oberflächen, sehr hohe Reinheit, sphärische Teilchenform und das Fehlen von Poren aus. Ihre mittlere Primärteilchengröße kann zwischen etwa 7 nm und 40 nm eingestellt werden. Dementsprechend variiert ihre spezifische Oberfläche zwischen etwa 50 und 400 m²/g.

Pyrogene Kieselsäuren besitzen eine röntgen-amorphe Struktur. Auch nach tagelanger Kalzinierung bei 1000° C bleibt diese Struktur erhalten, während übliche Fällungskieselsäuren bereits nach 20 Minuten bei gleicher Temperatur vollständig kristallisieren. Bekannt ist, daß die Temperaturbeständigkeit pyrogener Kieselsäuren durch Zugabe von Zirkonoxid weiter erhöht werden kann.

Die DE-OS 39 12 504 beschreibt die Verformung der extrem feinteiligen pyrogenen Kieselsäuren zu Formkörpern, die als Katalysatorträger geeignet sind. Zur Verformung werden die pyrogenen Kieselsäuren gemäß dieser Patentanmeldung mit Harnstoff, Methylcellulose und/oder Magnesiumstearat, Graphit, Aluminiumstearat unter Zusatz von Wasser homogenisiert, bei einer Temperatur von 80 bis 120° C getrocknet, zu einem Pulver zerkleinert, das Pulver zu Preßlingen verpreßt und während eines Zeitraumes von 0,5 bis 8 Stunden bei einer Temperatur von 400 bis 1200° C kalziniert.

Zur Herstellung der erfindungsgemäßen Katalysatoren werden die pyrogene Kieselsäure, die Vorläuferverbindung des Kupfers und gegebenenfalls die Vorläuferverbindung des basischen Oxids zusammen mit Verformungshilfsmitteln und Porenbildnern unter Zugabe von Wasser in einem Kneter intensiv verknetet und homogenisiert. Die so erhaltene plastische Katalysatormasse wird anschließend mit einer Strangpresse zu Extrudaten mit Durchmessern von 3 bis 6 mm und Längen von 3 bis 10 mm kompaktiert.

Als Vorläuferverbindungen des Kupfers für die Herstellung der Katalysatoren eignen sich Kupfercarbonat, Kupferacetat und Kupfer(II)-Oxid. Als basisches Oxid bzw. als dessen Vorläuferverbindungen können Natriumsilikat, Lithiumhydroxid, Natriumhydroxid und Magnesiumoxid eingesetzt werden. Als Verformungshilfsmittel und Porenbildner eignen sich Ammoniak, Monoethanolamin, Harnstoff, Magnesiumstearat, Polyethylenoxid und Methylcellulose

Die Extrudate werden bei 70 bis 120° C für die Dauer von etwa 12 Stunden getrocknet. Daran schließt sich eine Temperaturbehandlung, bzw. Kalzinierung, zur Zersetzung und Verbrennung der Verformungshilfsmittel und Porenbildner an. Hierfür reichen Temperaturen von 250 bis 350 °C aus. Um den Formkörpern eine ausreichende Bruchfestigkeit zu verleihen, empfiehlt es sich jedoch, die Formkörper für die Dauer von etwa 3 Stunden bei Temperaturen zwischen 500 und 900, bevorzugt zwischen 600 und 750° C, zu kalzinieren.

An die Kalzinierung schließt sich eine etwa 2-stündige Gasphasenreduktion der in den Katalysatorformkörpern enthaltenen Kupferverbindungen bei Temperaturen von etwa 250 - 350° C an. Als Reduktionsmittel können reines Wasserstoffgas oder Formiergas aus 95 Vol.-% Stickstoff und 5 Vol.-% Wasserstoff eingesetzt werden. Bevorzugt wird Formiergas verwendet. Die Reduktion mit Formiergas führt zu Katalysatoren mit einer höheren katalytischen Aktivität.

Soll das Katalysatormaterial zu Tabletten verarbeitet werden, so empfiehlt es sich, aus der verkneteten Katalysatormasse ebenfalls erst mit einer Strangpresse Extrudate zu erzeugen. Nach Trocknung der Extrudate werden sie vermahlen, angefeuchtet und tablettiert. An die Tablettierung schließt sich die schon oben beschriebene Kalzinierung und Reduktion der Katalysatortabletten an.

Die fertigen Katalysatoren weisen je nach Kupfergehalt und äußerer Form Schüttdichten zwischen 300 und etwa 800 g/l auf. Ihr Porenvolumen liegt zwischen 0,5 und 1,5 ml/g und setzt sich aus Meso- und Makroporen zusammen. Mikroporen mit Durchmessern unter 2 nm sind nicht feststellbar. Die Bruchfestigkeit der fertigen Katalysatorkörper liegt bei etwa 40 bis 65 N und garantiert damit einen geringen Abrieb bei der Durchführung der Hydrierreaktionen und bei eventuell notwendigen Regenerationszyklen.

Die mit der Röntgenbeugung bestimmbare mittlere Größe der Kupferkristallite liegt bei den erfindungsgemäßen Katalysatoren zwischen 5 und 50 nm. Die in den fertigen Katalysatoren vorliegende Kristallitgröße hängt von den gewählten Kalzinier- und Reduktionsbedingungen und den Kupfergehalten ab. Je höher die Kalziniertemperatur und/oder je länger die Katalysatoren kalziniert werden und je größer der Kupfergehalt gewählt wird, je größer werden auch die Kupferkristallite.

Die für das jeweilige Anforderungsprofil (Art der katalytischen Reaktion; gewünschter Umsatz und Selektivität; notwendige Stabilität der katalytischen Aktivität bei den zur Anwendung kommenden Reaktionsbedingungen) optimale Kristallitgröße kann der Fachmann mit wenigen orientierenden Versuchen ermitteln.

Die erfindungsgemäßen Katalysatoren können allgemein für die Hydrierung von organischen Verbindungen verwendet werden. Sie eignen sich besonders gut für die selektive Hydrierung von Furfural zu Furfurylalkohol, wenn ihr Kupfergehalt zwischen 25 und 50 Gew.-% bezogen auf das Gesamtgewicht der Katalysatoren liegt und wenn als basisches Oxid ein Natriumsilikat eingesetzt wird mit einem Gewichtsanteil am Katalysator zwischen 1 - 5 Gew.-%.

Die katalytischen Eigenschaften der erfindungsgemäßen Katalysatoren wurden deshalb bei der Hydrierung von Furfural zu Furfurylalkohol ermittelt und mit den Eigenschaften von Katalysatoren aus dem Stand der Technik verglichen.

Es zeigen
- Figur 1:: Abhängigkeit der Ausbeute an Furfurylalkohol in Abhängigkeit von der Betriebsdauer des Katalysatorbettes für 3 verschiedene Katalysatoren bei einer Raumgeschwindigkeit LHSV = 0,5 h⁻¹
- Figur 2:: Abhängigkeit der Ausbeute an Furfurylalkohol in Abhängigkeit von der Betriebsdauer des Katalysatorbettes für 2 verschiedene Katalysatoren bei einer Raumgeschwindigkeit LHSV = 0,2 h⁻¹

In den Beispielen wurden als Trägermaterialien pyrogene Kieselsäure für die erfindungsgemäßen Katalysatoren und verschiedene Fällungskieselsäuren und Kieselgur zur Herstellung von Vergleichskatalysatoren nach dem Stand der Technik eingesetzt. Die physiko-chemischen Daten dieser Materialien vor Verformung zu Katalysatorkörpern sind in Tabelle 1 aufgeführt.

**Tabelle 1**

| Eigenschaften der Trägermaterialien vor Verformung zu Katalysatorkörpern | | | | |
|---|---|---|---|---|
| Material | SiO₂-Gehalt ⁵⁾ [%] | BET-Oberfläche [m²/g] | mittlere Teilchengröße | pH-Wert |
| pyrogene Kieselsäure (Aerosil 200;Degussa) | >99,8 | 200 | 12 nm¹⁾ | 3,6-4,3³⁾ |
| Fällungskieselsäure 1 (FK 700; Degussa) | 99 | 700 | 15 µm²⁾ | 7 ⁴⁾ |
| Fällungskieselsäure 2 (Durosil; Degussa) | 98 | 60 | 15 µm²⁾ | 9 ⁴⁾ |
| Kieselgur (Clarcel 78;Elf-Atochem) | 90 | 60 | 11 µm | 4 - 6 |

| | | | | |
|---|---|---|---|---|
| ¹⁾ Größe der Primärteilchen | | | | |
| ²⁾ Größe der Agglomerate | | | | |
| ³⁾ in 4%-iger wäßriger Dispersion (nach DIN 53200) | | | | |
| ⁴⁾ in 5%-iger wäßriger Dispersion | | | | |
| ⁵⁾ gemessen nach Glühen bei 1000 °C für die Dauer von 2 Stunden | | | | |

Abgesehen von Beispiel 1 wurden alle Katalysatoren analog zu der USP 4,185,022 mit Kupfercarbonat als Vorläuferverbindung für Kupfer hergestellt. In den Beispielen, in denen ein basisches Oxid als Promotor der Katalysatormasse zugegeben wurde, wurde Natriumsilikat mit einem Gewichtsanteil an der Katalysatormasse von 2,2 Gew.-% bzw. 4,4 Gew.-% verwendet.

Der Versuch, Vergleichskatalysatoren auf einem Träger aus Bimsstein gemäß Beispiel 1 der USP 4,185,022 herzustellen, scheiterte an der Tatsache, daß es nicht gelang, Bimsstein mit einer spezifischen Oberfläche von mindestens 60 m²/g zu beschaffen. Die spezifischen Oberflächen handelsüblicher Bimssteinsorten liegen im Bereich von 1 bis 2 m²/g.

### Beispiel 1:

Zur Herstellung von erfindungsgemäßen Katalysatoren mit einem Kupfergehalt von 12,5 Gew.-% wurden
- 250,0 g: pyrogene Kieselsäure
- 112,2 g: Kupferacetat (Cu(CH₃COO)₂ · H₂O)
- 16,0 g: Harnstoff
- 40,0 g: Monoethanolamin
- 22,5 g: Magnesium-Stearat und
- 60,0 g: Methylcellulose
unter Zusatz von Wasser in einem Kneter zu einer plastischen Masse verknetet und anschließend zu Extrudaten von 4 mm Länge und 3,3 mm Durchmesser extrudiert. Die Extrudate wurden dann in einem Ofen bei 800 °C für die Dauer von 3 Stunden kalziniert und danach bei einer Temperatur von 350 °C für die Dauer von einer Stunde unter einem Strom von Formiergas (95 Vol-% N₂ + 5 Vol.-% H₂) reduziert. Die fertigen Katalystoren enthielten 12,5 Gew.-% Kupfer, Rest SiO₂.

### Vergleichsbeispiel 1:

- 250,0 g: Fällungskieselsäure 1 und
- 62,1 g: Kupfercarbonat (CuCO₃ · Cu(OH)₂)
wurden zusammen mit Harnstoff, Magnesium-Stearat und Methylcellulose wie in Beispiel 1 zu Katalysatoren mit 12,5 Gew.-% Kuper verarbeitet.

### Vergleichsbeispiel 2:

- 250,0 g: Fällungskieselsäure 2 und
- 62,1 g: Kupfercarbonat
wurden zusammen mit Harnstoff, Magnesium-Stearat und Methylcellulose wie in Beispiel 1 zu Katalysatoren mit 12,5 Gew.-% Kuper verarbeitet.

### Beispiel 2:

- 250,0 g: pyrogene Kieselsäure
- 149,5 g: Kupfercarbonat
- 21,5 g: Natriumsilikat (als 35,35 %ige Wasserglaslösung)
- 1,0 g: Polyethylenoxid und
- 60,0 g: Methylcellulose
wurden wie in Beispiel 1 zu erfindungsgemäßen Katalysatoren mit 25 Gew.-% Kupfer und 2,2 Gew.-% Natriumsilikat verarbeitet.

### Vergleichsbeispiel 3:

- 250,0 g: Kieselgur
- 149,5 g: Kupfercarbonat und
- 21,5 g: Natriumsilikat
wurden zusammen mit Polyethylenoxid und Methylcellulose wie in Beispiel 2 zu extrudierten Katalysatoren mit 25 Gew.-% Kupfer und 2,2 Gew.-% Natriumsilikat verarbeitet.

### Beispiel 3:

- 250,0 g: pyrogene Kieselsäure
- 145,0 g: Kupfercarbonat und
- 2,0 g: Polyethylenoxid
wurden unter Zusatz von Wasser in einem Kneter zu einer plastischen Masse verknetet und anschließend zu Extrudaten von 5 mm Länge und 5 mm Durchmesser extrudiert. Die Extrudate wurden wie in Beispiel 1 kalziniert und reduziert. Die fertigen Katalysatoren enthielten 25 Gew.-% Kupfer.

### Beispiel 4:

- 250,0 g: pyrogene Kieselsäure
- 149,5 g: Kupfercarbonat
- 21,5 g: Natriumsilikat und
- 2,0 g: Polyethylenoxid
wurden wie in Beispiel 3 zu Katalysatoren verarbeitet. In Abänderung zu den bisherigen Beispielen wurde in diesem und den folgenden Beispielen die Temperatur beim Kalzinieren von 800° C auf 700° C gesenkt. Die fertigen Katalysatoren enthielten 25 Gew.-% Kupfer sowie 2,2 Gew.-% Natriumsilikat.

### Beispiel 5:

- 250,0 g: pyrogene Kieselsäure
- 149,5 g: Kupfercarbonat
- 21,5 g: Natriumsilikat und
- 2,0 g: Polyethylenoxid
wurden analog zu Beispiel 4 zu Katalysatorkörpern von 4 mm Länge und 3,3 mm Durchmesser extrudiert, kalziniert und reduziert. Die fertigen Katalysatoren enthielten 25 Gew.-% Kupfer sowie 2,2 Gew.-% Natriumsilikat.

### Beispiel 6:

- 250,0 g: pyrogene Kieselsäure
- 149,5 g: Kupfercarbonat
- 21,5 g: Natriumsilikat
- 0,75 g: Polyethylenoxid
- 6,75 g: Magnesium-Stearat und
- 5,0 g: Methylcellulose
wurden unter Zusatz von Wasser in einem Kneter zu einer plastischen Masse verknetet und anschließend zu Extrudaten von 4 mm Länge und 3,3 mm Durchmesser extrudiert und getrocknet. Die getrockneten Extrudate wurden dann zu einem rieselfähigen Pulver vermahlen und mit einer Tablettiermaschine zu Tabletten von 5 mm Durchmesser und 5 mm Höhe verpreßt. Kalzinierung und Reduktion erfolgten gemäß Beispiel 4. Die fertigen Katalysatoren enthielten 25 Gew.-% Kupfer und 2,2 Gew.-% Natriumsilikat.

### Beispiel 7:

- 250,0 g: pyrogene Kieselsäure
- 455,0 g: Kupfercarbonat
- 32,6 g: Natriumsilikat und
- 2,0 g: Polyethylenoxid
wurden wie in Beispiel 4 zu Katalysatoren verarbeitet. Die fertigen Katalysatoren enthielten 50 Gew.-% Kupfer und 2,2 Gew.-% Natriumsilikat.

### Beispiel 8:

- 250,0 g: pyrogene Kieselsäure
- 455,0 g: Kupfercarbonat
- 32,6 g: Natriumsilikat
- 2,0 g: Polyethylenoxid
- 18,0 g: Magnesium-Stearat und
- 13,0 g: Methylcellulose
wurden wie in Beispiel 6 zu Katalysatoren in Tablettenform verarbeitet. Die fertigen Katalysatoren enthielten 50 Gew.-% Kupfer sowie 2,2 Gew.-% Natriumsilikat.

### Beispiel 9:

- 250,0 g: pyrogene Kieselsäure
- 477,0 g: Kupfercarbonat
- 68,2 g: Natriumsilikat
- 2,0 g: Polyethylenoxid
- 18,0 g: Magnesium-Stearat und
- 13,0 g: Methylcellulose
wurden wie in Beispiel 6 zu Katalysatoren in Tablettenform verarbeitet. Die fertigen Katalysatoren enthielten 50 Gew.-% Kupfer und 4,4 Gew.-% Natriumsilikat.

### Beispiel 10:

Es wurden tablettenförmige Katalysatoren wie in Beispiel 9 beschrieben mit 50 Gew.-% Kupfer und 4,4 Gew.-% Natriumsilikat hergestellt. Die Reduktion der Katalysatoren wurde jedoch nicht unter Verwendung von Formiergas, sondern unter Verwendung von reinem Wasserstoff vorgenommen.

### Beispiel 11:

- 250,0 g: pyrogene Kieselsäure
- 1095,3 g: Kupfercarbonat
- 56,0 g: Natriumsilikat
- 2,0 g: Polyethylenoxid
- 18,0 g: Magnesium-Stearat und
- 13,0 g: Methylcellulose
wurden wie in Beispiel 6 zu Katalysatortabletten verarbeitet. Die fertigen Katalysatoren enthielten 70 Gew.-% Kupfer und 2,2 Gew.-% Natriumsilikat.

Die Zusammensetzung der nach den obigen Beispielen hergestellten Katalysatoren sowie von zwei kommerziell erhältlichen Kupferchromit-Katalysatoren K1 und K2 sind in der Tabelle 2 aufgeführt. Tabelle 2 enthält außerdem die Abmessungen sowie die gemessenen Schüttdichten der Formkörper.

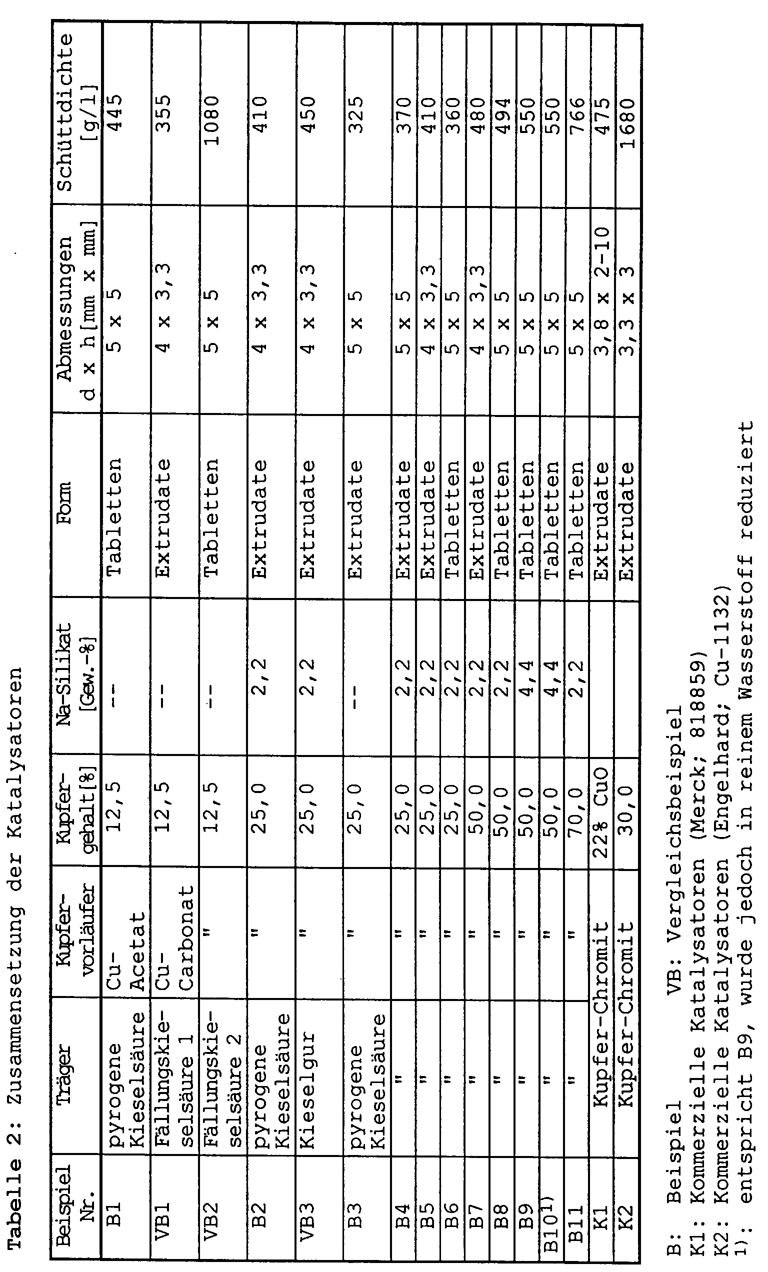

Tabelle 3 enthält die an den fertigen Katalysatoren gemessene spezifische Oberfläche (nach DIN 66131 mit Stickstoff bestimmt), das Porenvolumen (nach DIN 66 133 mit Quecksilber-Intrusion bei 4000 bar Druck) und die Bruchfestigkeit. Die Bruchfestigkeit wurde mit dem Bruchfestigkeitstester der Firma Erweka, Typ TBH 28, in axialer Richtung bestimmt.

Die Begriffe Mikro-, Meso- und Makroporen sind in Tabelle 3 in Übereinstimmung mit den Definitionen der IUPAC gewählt. Gemäß diesen Definitionen umfassen die Porengruppen folgende Durchmesserbereiche:
- Mikroporen:: d < 2 nm
- Mesoporen:: d = 2 .. 50 nm
- Makroporen:: d > 50 nm

**Tabelle 3**

| Physikalische Eigenschaften der fertigen Katalysatorkörper | | | | | |
|---|---|---|---|---|---|
| Beispiel Nr. | BET-Oberfläche [m²/g] | Porenvolumen [ml/g] | | | Bruchfestigkeit [N] |
| | | meso | makro | total | |
| B1 | 129 | 0,63 | 0,17 | 0,80 | 56 |
| B2 | 10 - 15 | 0,05 | 0,89 | 0,94 | 38 |
| B4 | 71 | 0,42 | 0,98 | 1,40 | 63 |
| B5 | 71 | 0,14 | 0,82 | 0,96 | 41 |
| B6 | 85 | 0,30 | 0,82 | 1,12 | 41 |
| K1 | 180-240 | 0,30 | 0,49 | 0,79 | 28 |
| K2 | 40 | -- | -- | -- | 125 |

Mit der Quecksilber-Intrusion nach DIN 66 133 werden nur Meso- und Makroporen erfaßt, Kontrollmessungen durch Aufnahme der Stickstoff-Adsorptionsisothermen zeigten jedoch, daß die erfindungsgemäßen Katalysatorformkörper praktisch keine Mikroporen aufweisen.

### Beispiel 12:

Die Katalysatoren der Tabelle 2 wurden bezüglich ihrer Leistungsdaten bei der selektiven Gasphasenhydrierung von Furfural zu Furfurylalkohol miteinander verglichen. Die Hydrierungen wurden kontinuierlich in einem Rohrreaktor von 2,54 cm Innendurchmesser und einer Länge von 38,5 cm vorgenommen.

Die Katalysatorbeladung des Reaktors betrug 40 ml in einem Festbett. Furfural wurde mit einer HPLC-Pumpe einem Verdampfer zugeführt, verdampft und mit Wasserstoffgas gemischt über das Katalysatorbett geleitet. Die Temperaturen von Verdampfer, Reaktor und Katalysatorbett wurden geregelt.

Die Hydrierparameter Druck, Temperatur und H₂/Furfural-Verhältnis bestimmen die Art der Hydrierung (Gasphasen-Hydrierung oder Rieselbett-Hydrierung). Bei niedrigen Drucken, hoher Temperatur und großem H₂/Furfural-Verhältnis ist die Hydrierung eine Gasphasenreaktion. Die Siedepunkte von Furfural und Furfurylalkohol liegen unter Normalbedingungen bei 161,7 °C und 171 °C. Das für die Prüfungen eingesetzte Furfural hatte folgende Qualität:

| | |
|---|---|
| Furfural G.C. Assay | 99,4 [%] |
| Azidität | 0,012 [Eq/l] |
| Feuchtigkeitsgehalt | 0,05 [Gew.-%] |
| Rückstand | 0,18 [Gew.-%] |

Die Katalysatorprüfungen wurden bei einer Raumgeschwindigkeit LHSV (liquid hourly space velocity) von 0,5 h⁻¹ durchgeführt. Für die Berechnung der Raumgeschwindigkeit wurde das Volumen des von der HPLC-Pumpe geförderten flüssigen Furfurals und das Volumen des Katalysatorbettes verwendet. Die Temperatur von Reaktor und Katalysatorbett wurde auf 170° C und der Gasdruck im Reaktor auf 3 bar eingeregelt.

Die Leistungsdaten der Katalysatoren wurden jeweils nach einer Einfahrphase von 4 Stunden durch GC-Analyse des Flüssigproduktes bestimmt. Die Ergebnisse sind in den Tabellen 4 und 5 aufgeführt. Sie enthalten die mit den jeweiligen Katalysatoren erzielten Umsätze, Selektivitäten und Ausbeuten sowie die spezifischen Katalysatoraktivität in Gramm des Produktes (Furfurylalkohol) pro Stunde und Gramm Katalysator beziehungsweise in Gramm des Produktes pro Stunde und Milliliter Katalysator.

Der zweiten Definition der spezifischen Katalysatoraktivität kommt besondere Bedeutung zu, da sie eine Aussage darüber zuläßt, welches Volumen für das Katalysatorbett in einer technischen Hydrierapparatur zur Verfügung gestellt werden muß, um eine gewünschte Produktivität (Gramm Furfurylalkohol pro Stunde) zu gewährleisten.

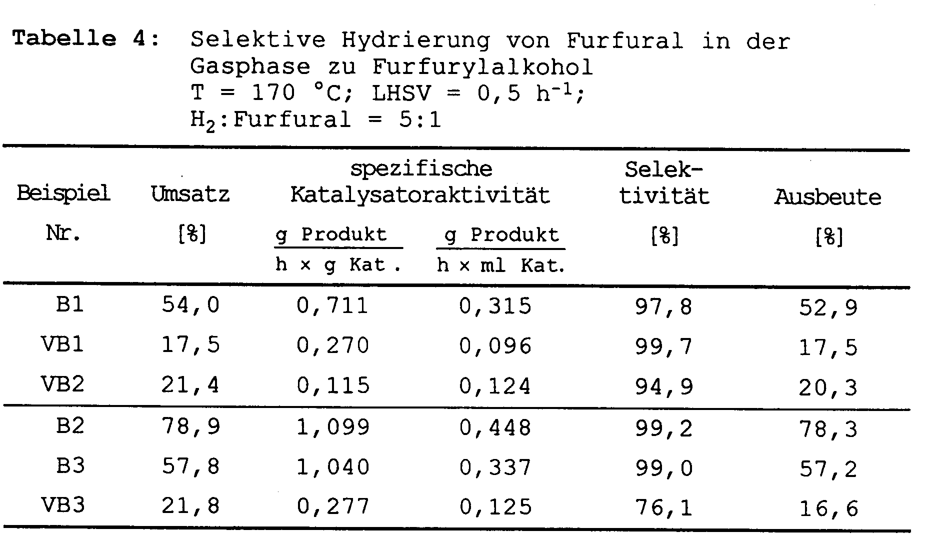

Tabelle 4 enthält die Gegenüberstellung der Ergebnisse von Katalysatoren, die bei 800° C kalzinziert wurden. Tabelle 4 zeigt, daß der erfindungsgemäße Katalysator B1 den Vergleichskatalysatoren VB1 und VB2 bezüglich Umsatz und Ausbeute weit überlegen ist. Gleiches gilt für die spezifische Katalysatoraktivität. Alle drei Katalysatoren waren ohne Zusatz eines Promotors hergestellt worden. Die Katalysatoren B2, B3 und VB3 weisen einen Kupfergehalt von jeweils 25 Gew.-% auf. B2 und VB3 enthalten außerdem 2,2 Gew.-% Natriumsilikat als Promotor. Katalysator B3 enthält dagegen keinen Promotor. Trotz des fehlenden Promotors ist Katalysator B3 dem Vergleichskatalysator noch weit überlegen. Noch wesentlich bessere Daten weist der promotierte Katalysator B2 auf.

Tabelle 5 enthält die Ergebnisse der Hydrierungen für die erfindungsgemäßen Katalysatoren der Beispiele B4 bis B7 sowie für die beiden kommerziellen Katalysatoren K1 und K2. Die Katalysatoren B4 bis B7 wurden ohne die basischen Verformungshilfsmittel Harnstoff und Monoethanolamin verformt und nur bei 700° C kalziniert. Diese Maßnahmen führten zu einer wesentlichen Steigerung der Katalysatoraktivität.

Die Katalysatoren B4 bis B6 weisen etwas geringere Umsätze als Katalysator K2 auf. Dieser Nachteil konnte jedoch durch Erhöhung des Kupfergehaltes von 25 Gew.-% auf 50 Gew.-% bei den Katalysatoren nach Beispiel B7 voll ausgeglichen werden. Die spezifische Katalysatoraktivität pro Gramm Katalysator liegt bei allen erfindungsgemäßen Katalysatoren um bis zum Faktor 5 über der Aktivität des besten kommerziellen Katalysators K2.

Bezieht man die Katalysatoraktivität nicht auf das Gesamtgewicht der Katalysatoren, sondern nur auf den Kupfergehalt, so vergrößert sich die Katalysatoraktivität der Katalysatoren von Beispiel B7 gegenüber K2 wegen der unterschiedlichen Schüttdichten noch um den Faktor 2. Die Katalysatoren B7 haben also eine 7-fach höhere Aktivität (2 x 1,195/0,333) bei gleicher Kupfermenge im Katalysatorbett als die Katalysatoren K2. Darüber hinaus weisen die erfindungsgemäßen Katalysatoren wesentlich verbesserte Selektivitäten und Ausbeuten auf.

Besonders wichtig ist hierbei auch die Tatsache, daß die auf das Katalysatorvolumen bezogene spezifische Aktivität der erfindungsgemäßen Katalysatoren nahezu identisch mit den Werten der Kupferchromit-Katalysatoren K1 und K2 sind. Die erfindungsgemäßen Katalysatoren benötigen also für die gleiche Produktivität keine größeren Reaktoren.

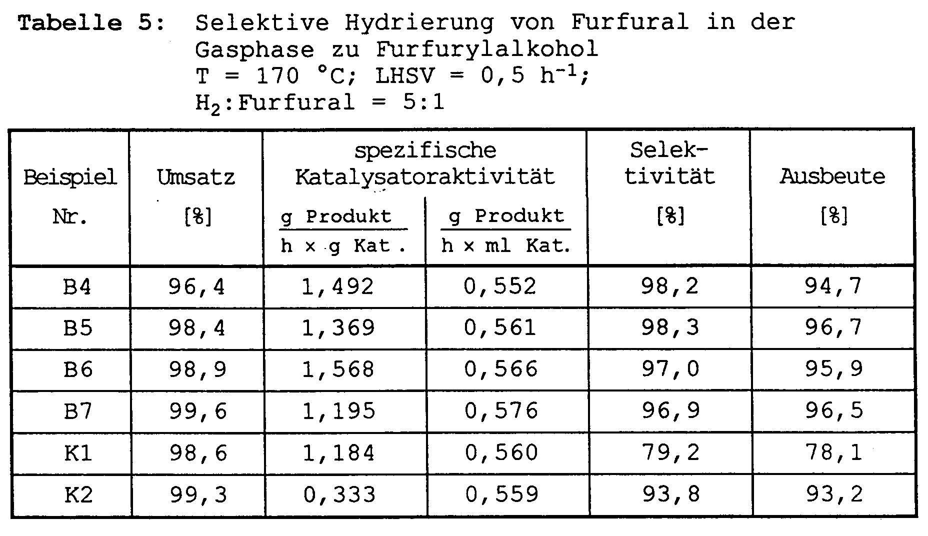

Tabelle 6 enthält die Ergebnisse der Hydrierungen für die erfindungsgemäßen Katalysatoren der Beispiele B8 bis B11.

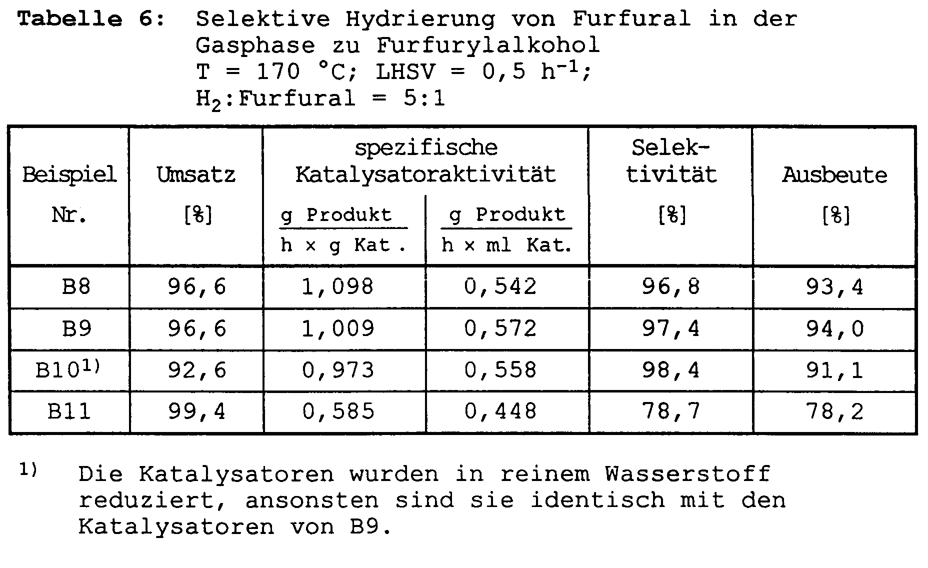

Tabelle 6 zeigt, daß die Verdoppelung des Gehaltes an Natriumsilikat von 2,2 Gew.-% (Katalysatoren nach B8) auf 4,4 Gew.-% (Katalysatoren nach B9) die Selektivität der Katalysatoren erhöht, so daß sich bei gleichem Umsatz eine höhere Ausbeute ergibt.

Die Katalysatoren nach B10 wurden im Unterschied zu allen anderen Katalysatoren nicht mit Formiergas, sondern mit reinem Wasserstoff reduziert. Die Reduktion in reinem Wasserstoff vermindert den erzielbaren Umsatz gegenüber den mit Formiergas reduzierten Katalysatoren nach Beispiel 9 um 4 %. Trotz leicht erhöhter Selektivität der mit reinem Wasserstoffgas reduzierten Katalysatoren vermindert sich deshalb auch die mit ihnen erreichbare Ausbeute.

Die Katalysatoren nach Beispiel 11 weisen aufgrund ihres hohen Kupfergehaltes (70 Gew.-%) den höchsten Umsatz (99,4 %) auf. Ihre Selektivität ist jedoch gegenüber den Katalysatoren mit geringeren Kupfergehalten erheblich vermindert. Zur Verbesserung ihrer Selektivität kann wie in Beispiel 9 gezeigt, der Gehalt an Natriumsilikat erhöht werden.

### Beispiel 13

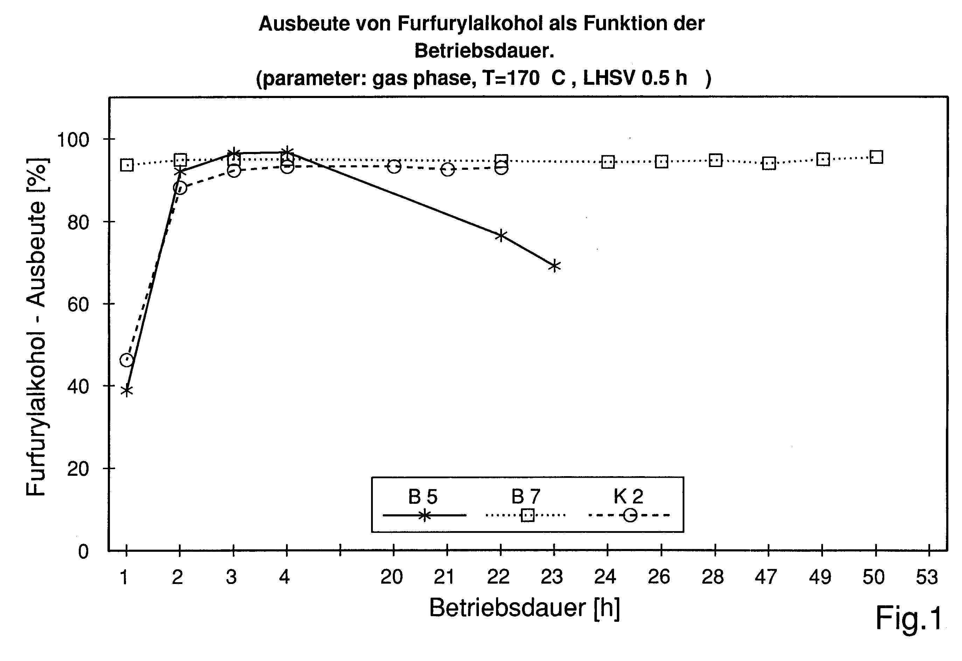

Die Katalysatoren der Beispiele B5, B7 und die Kupferchromit-Katalysatoren K2 wurden einem Langzeittest bei einer Belastung mit einer Raumgeschwindigkeit LHSV von 0,5 h⁻¹ unterzogen. Die Ergebnisse dieses Langzeittests zeigen Tabelle 7 und Figur 1. Die Katalysatoren des Beispiels B5 zeigen anfänglich eine sehr hohe Ausbeute an Furfurylalkohol, desaktivieren jedoch wegen des geringen Kupfergehaltes schon nach 4 Stunden Betriebsdauer deutlich. Die Katalysatoren von Beispiel B7 mit einem Kupfergehalt von 50 Gew.-% zeigen dagegen auch nach 50 Stunden Betriebsdauer noch keinerlei Desaktivierung bei gleichzeitig höherer Ausbeute als mit den Katalysatoren K2.

**Tabelle 7**

| Ausbeute von Furfurylalkohol als Funktion der Betriebsdauer (Gasphasenhydrierung; T=170° C; LHSV = 0,5 h⁻¹) | | | |
|---|---|---|---|
| Betriebsdauer [h] | Ausbeute [%] | | |
| | B5 | B7 | K2 |
| 1 | 38,9 | 93,5 | 46,2 |
| 2 | 92,1 | 94,9 | 88,1 |
| 3 | 96,4 | 95 | 92,3 |
| 4 | 96,7 | 95 | 93,2 |
| 20 | | | 93,2 |
| 21 | | | 92,4 |
| 22 | 76,4 | 94,5 | 92,9 |
| 23 | 69 | | |
| 24 | | 94,2 | |
| 26 | | 94,3 | |
| 28 | | 94,6 | |
| 47 | | 93,9 | |
| 49 | | 94,9 | |
| 50 | | 95,4 | |

### Beispiel 4:

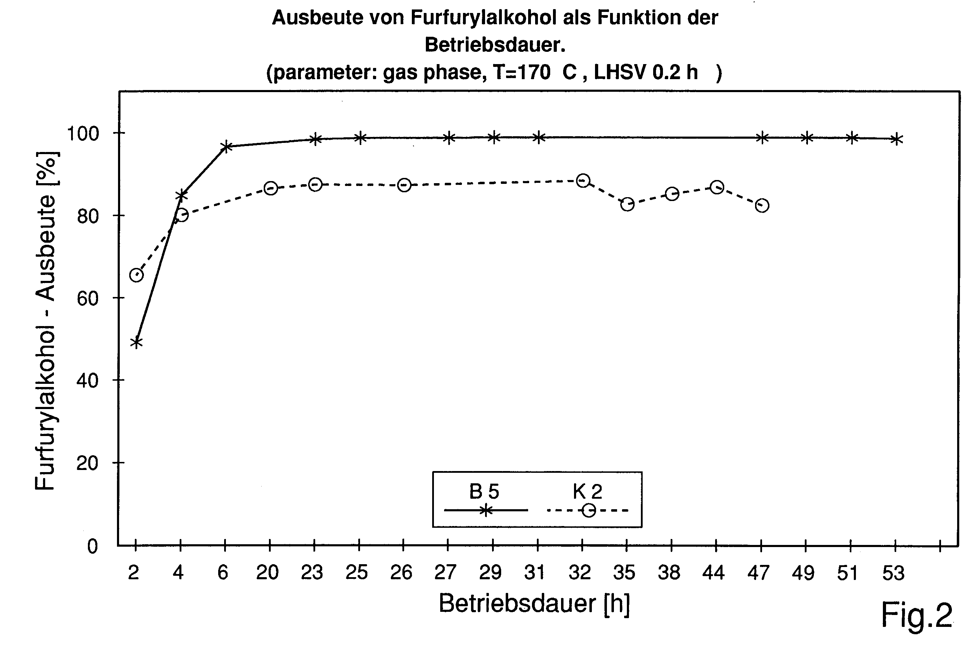

Die Katalysatoren von Beispiel B5 und die Kupferchromit-Katalysatoren K2 wurden einem zusätzlichen Langzeittest bei einer auf 0,2 h⁻¹ verringerten Raumgeschwindigkeit unterzogen. Die Ergebnisse von Tabelle 8 und die grafische Darstellung in Figur 2 zeigen, daß bei dieser verringerten Belastung die Katalysatoren von Beispiel B5 mit nur 25 Gew.-% Kupfer auch noch nach 53 Stunden Betriebsdauer nicht desaktivieren.

**Tabelle 8**

| Ausbeute von Furfurylalkohol als Funktion der Betriebsdauer (Gasphasenhydrierung; T=170°C; LHSV = 0,2 h⁻¹) | | |
|---|---|---|
| Betriebsdauer [h] | Ausbeute [%] | |
| | B5 | K2 |
| 2 | 49,1 | 65,4 |
| 4 | 84,8 | 80,1 |
| 6 | 96,6 | - |
| 20 | - | 86,5 |
| 23 | 98,4 | 87,4 |
| 25 | 98,7 | - |
| 26 | - | 87,2 |
| 27 | 98,7 | - |
| 29 | 98,8 | - |
| 31 | 98,8 | - |
| 32 | - | 88,3 |
| 35 | - | 82,6 |
| 38 | - | 85,1 |
| 44 | - | 86,7 |
| 47 | 98,8 | 82,4 |
| 49 | 98,8 | |
| 51 | 98,8 | |
| 53 | 98,5 | |

## Patentansprüche

1. Geformter Kupfer-Katalysator für die selektive Hydrierung von Furfural zu Furfurylalkohol enthaltend eine innige Mischung aus Kupfer und pyrogener Kieselsäure,
**dadurch gekennzeichnet**,
daß die durch Röntgenbeugung bestimmbare mittlere Größe der Kupferkristallite zwischen 5 und 50 nm liegt, der Gehalt an Kupfer bezogen auf das Gesamtgewicht des Katalysators zwischen 10 und 70 Gew.-% beträgt und der Katalysator gegebenenfalls noch bis zu 15 Gew.-% eines basischen Oxids enthält.

2. Katalysator nach Anspruch 1,
**dadurch gekennzeichnet**,
daß der Gehalt an Kupfer zwischen 12,5 und 50 Gew.-%, bevorzugt zwischen 25 und 50 Gew.-% bezogen auf das Gesamtgewicht des Katalysators beträgt und daß das basische Oxid ein Natriumsilikat mit einem Gewichtsanteil am Katalysator von 1 bis 5 % ist.

3. Verfahren zur Herstellung eines geformten Kupfer-Katalysators enthaltend eine innige Mischung aus Kupfer, pyrogener Kieselsäure und gegebenenfalls eines basischen Oxids mit einem Gehalt des fertigen Katalysators an Kupfer zwischen 10 und 70 Gew.-% und an dem basischen Oxid von bis zu 15 Gew.-%, erhältlich durch Verkneten der pyrogenen Kieselsäure, der Vorläuferverbindungen des Kupfers sowie der Vorläuferverbindungen des basischen Oxids zusammen mit Verformungshilfsmitteln und Porenbildner unter Zugabe von Wasser zu einer plastischen Katalysatormasse, Verpressen der Katalysatormasse zu Extrudaten, Trocknen, Kalzinieren und Reduzieren des Kupfers,
**dadurch gekennzeichnet**,
daß die pyrogene Kieselsäure eine spezifische Oberfläche zwischen 50 und 400 m²/g aufweist und die verformte Katalysatormasse bei Temperaturen zwischen 500 und 900, bevorzugt zwischen 600 und 750°C kalziniert und abschließend einer Gasphasenreduktion bei Temperaturen zwischen 250 und 350°C unterworfen wird.

4. Verfahren nach Anspruch 3,
**dadurch gekennzeichnet**,
daß die Gasphasenreduktion in reinem Wasserstoff vorgenommen wird.

5. Verfahren nach Anspruch 3,
**dadurch gekennzeichnet**,
daß die Gasphasenreduktion in einem Stickstoff/Wasserstoff-Gemisch durchgeführt wird.

6. Verwendung des Katalysators nach einem der vorstehenden Ansprüche 1 oder 2 für die selektive Hydrierung von organischen Verbindungen insbesondere für die selektive Hydrierung von Furfural zu Furfurylalkohol.

## Claims

1. A formed copper catalyst for the selective hydrogenation of furfural into furfuryl alcohol comprising an intimate mixture of copper and pyrogenic silicic acid, characterised in that the average size, determinable by X-ray diffraction, of the copper crystallites is between 5 and 50 nm, the copper content, based on the total weight of the catalyst, is between 10 and 70 wt.% and the catalyst optionally also comprises up to 15 wt.% of a basic oxide.

2. A catalyst according to claim 1, characterised in that the copper content is between 12.5 and 50 wt.%, preferably between 25 and 50 wt.%, based on the total weight of the catalyst and in that the basic oxide is a sodium silicate which constitutes from 1 to 5 wt.% of the catalyst.

3. A method of producing a formed copper catalyst comprising an intimate mixture of copper, pyrogenic silicic acid and optionally a basic oxide, the final catalyst having a copper content of between 10 and 70 wt.% and a basic oxide content of up to 15 wt.% and being obtainable by kneading the pyrogenic silicic acid, the precursor compounds of the copper and the precursor compounds of the basic oxide together with auxiliary forming substances and pore formers, with the addition of water, to form a plastic catalyst composition, pressing of the catalyst composition to produce extrudates, drying, calcination and reduction of the copper, characterised in that the pyrogenic silicic acid comprises a specific surface area of between 50 and 400 m²/g and the formed catalyst composition is calcined at temperatures of between 500 and 900, preferably between 600 and 750°C and finally subjected to gas phase reduction at temperatures of between 250 and 350°C.

4. A method according to claim 3, characterised in that the gas phase reduction is carried out in pure hydrogen.

5. A method according to claim 3, characterised in that the gas phase reduction is effected in a nitrogen/hydrogen mixture.

6. Use of the catalyst according to either one of preceding claims 1 or 2 for the selective hydrogenation of organic compounds, especially for the selective hydrogenation of furfural into furfuryl alcohol.

## Revendications

1. Catalyseur formé à base de cuivre pour l'hydrogénation sélective de furfural en furfurylalcool contenant un mélange intime de cuivre et d'acide silicique,
caractérisé en ce que
la taille moyenne des cristallites de cuivre détectable par diffraction des rayons X est comprise entre 5 et 50 nm, que la teneur en cuivre par rapport au poids total du catalyseur est comprise entre 10 et 70 % en poids et que le catalyseur contient, le cas échéant, encore jusqu'à 15 % en poids d'un oxyde alcalin.

2. Catalyseur selon la revendication 1,
caractérisé en ce que
la teneur en cuivre est comprise entre 12,5 et 50 % en poids, de préférence entre 25 et 50 % en poids par rapport au poids total du catalyseur et que l'oxyde alcalin est un silicate de sodium avec une proportion massique de 1 à 5 %.

3. Procédé de fabrication d'un catalyseur formé à base de cuivre contenant un mélange intime de cuivre et d'acide silicique pyrogéné et, le cas échéant, un oxyde alcalin, avec une teneur en cuivre du catalyseur fini comprise entre 10 et 70 % en poids et en oxyde alcalin de jusqu'à 15 % en poids, obtenu au moyen d'un malaxage de l'acide silicique pyrogéné, des composés précurseurs du cuivre et des composés précurseurs de l'oxyde alcalin conjointement avec les agents auxiliaire de mise en forme et les agents porogènes, sous addition d'eau, conduisant à une masse de catalyseur plastique, d'une extrusion de la masse de catalyseur en produits d'extrusion, du séchage, de la calcination et de la réduction du cuivre,
caractérisé en ce que
l'acide silicique pyrogéné présente une surface spécifique comprise entre 50 et 400 m²/g et que la masse de catalyseur mise en forme est calcinée à des températures comprises entre 500 et 900°C, de préférence entre 600 et 750°C et qu'elle est finalement soumise à une réduction en phase gazeuse à des températures comprises entre 250 et 350°C.

4. Procédé selon la revendication 3,
caractérise en ce que
la réduction en phase gazeuse est effectuée à l'aide d'hydrogène pur.

5. Procédé selon la revendication 3,
caractérise en ce que
la réduction en phase gazeuse est effectuée à l'aide d'un mélange d'azote et d'hydrogène.

6. Utilisation du catalyseur selon une des revendications 1 ou 2 précédentes pour l'hydrogénation sélective de composés organiques, en particulier pour l'hydrogénation de furfural en furfurylalcool.
